# FASCICULE DE BREVET EUROPEEN

(11) **EP 4 042 003 B1**
(45) Date de publication et mention de la délivrance du brevet: **13.09.2023**
(21) Numéro de dépôt: 20792575.1
(22) Date de dépôt: 09.10.2020
(51) Int. Cl.: F01P 11/04, F01P 7/16, F16L 27/12

(54) **MODULE FLUIDIQUE**
FLUIDMODUL
FLUID MODULE

(30) Priorité: 11.10.2019 US 201962913917 P
(43) Date de publication de la demande: 17.08.2022
(73) Titulaire: Sogefi Air & Cooling, 78280 Guyancourt (FR)
(72) Inventeur: COLIN, Boris, 68370 ORBEY (FR); SCHUB, Arnaud, 68040 INGERSHEIM (FR)
(74) Mandataire: Cabinet Nuss
(86) Numéro de dépôt international: PCT/EP2020/078444
(87) Numéro de publication internationale: WO 2021/069680

(56) Documents cités:
- CN-A- 107 653 938
- FR-A1- 2 271 348
- FR-A1- 2 909 715
- US-A- 5 409 066
- US-A1- 2004 164 188
- US-A1- 2018 180 205

## Description

L'invention concerne le domaine des circuits de circulation de fluides, en particulier la circulation contrôlée de fluides liquides.

Elle vise dans un tel contexte, et en particulier dans un environnement sous capot de véhicule automobile à moteur à combustion interne, un système de circulation de fluide entre au moins deux corps creux ou boîtiers, avec établissement de liaisons fluidiques étanches multiples entre de tels corps, lesquels peuvent présenter des dispositions relatives variables (notamment avec des faces de raccordement qui ne sont pas mutuellement en regard).

Les liaisons précitées doivent en outre pouvoir absorber les tolérances de fabrication et d'assemblage, ainsi que les déformations en fonctionnement. Un système de circulation de fluides tel qu'évoqué ci-dessus est généralement composé d'au moins deux, généralement de plusieurs, boitiers fonctionnels reliés entre eux. Les faces de référence sur lesquelles sont fixées et raccordées ces boitiers fonctionnels ne sont pas forcément les mêmes. A cela s'ajoutent les tolérances de fabrication des différents boitiers fonctionnels du circuit, les petites déformations fonctionnelles (dilatation, variations de pressions...). Il s'agit alors de :- relier les différents boitiers fonctionnels entre-eux avec la nécessité de rattraper ces tolérances,- d'avoir une certaine flexibilité pour absorber des petites déformations fonctionnelles (dilatation, variations de pressions, vibrations,...), ce tout en assurant une étanchéité du système de circulation (à savoir du fluide interne vis-à-vis de l'extérieur).

Cette fonction est généralement réalisée par des tuyaux flexibles à base élastomère (communément désignés par « durites ») qui ont de bonnes caractéristiques de souplesse et d'étanchéité.

Les distances/parcours entre les différentes interfaces peuvent être variés et peuvent donc nécessiter la gestion d'une diversité importante de référence de durites.

De plus, il est recommandé de prévoir au moins une fixation supplémentaire intermédiaire (entre ses deux extrémités reliées) en cas de longueur importante, de conformation non rectiligne et/ou d'environnement sensible.

Par ailleurs, l'automatisation, voire même la simple mécanisation, du montage de durites souples est difficile et délicate. Le recours à un montage entièrement manuel est souvent nécessaire. Ce d'autant plus que sont raccordement étanche requiert la mise en place d'un collier, et son emmanchement à force sur un embout de forme particulière (embout à olive).

La présente invention a pour but de pallier ces inconvénients.

A cet effet, l'invention a pour principal objet un module fluidique selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue partielle en perspective de dessus d'un système de circulation de fluide (liquide) avec un module fluidique en accord avec un mode de réalisation de l'invention, le système comprenant un premier boîtier fonctionnel sous forme de vanne ou de boîtier de distribution et un second corps sous forme de plaque de répartition ou de distribution ;
[Fig. 2] est une vue similaire à celle de la figure 1, le module pré-monté intégrant la vanne (boîtier + actionneur) étant sur le point d'être assemblé avec la plaque de répartition pour former le système de circulation ;
[Fig. 3] représente une vue de détail d'une des liaisons fluidiques du système représenté figure 1, à une autre échelle et en coupe selon le plan PM ;
[Fig. 4] est une vue de dessus du module pré-monté de la figure 2, avec illustration des facultés d'articulation et de déplacement relatif limités au niveau des interfaces d'emboîtement ;
[Fig. 5] est une vue de dessus du module pré-monté similaire à celle de la figure 4, mais à une autre échelle et avec mise en évidence des zones de préhension et d'appui ;
[Fig. 6] est une vue en perspective et partiellement éclatée du module représenté figure 5 (mais n'intégrant pas l'actionneur, éventuelle variante de pré-montage du module), et,
[Fig. 7] est une vue en perspective du module pré-monté des figures 4 à 6, intégrant également l'actionneur, selon une variante de réalisation.

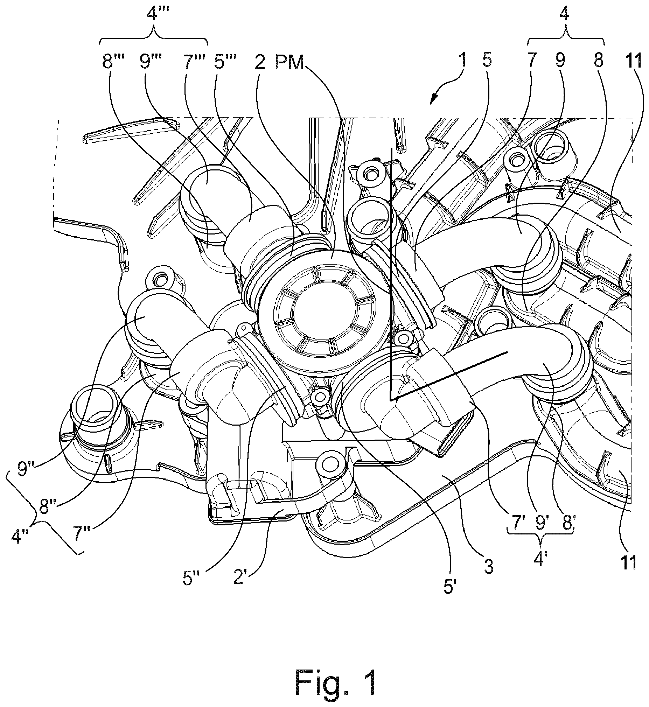

Les figures 1 à 3 montrent, au moins en partie, un système (1) de circulation de fluide entre au moins un premier corps ou boîtier (2) et au moins un deuxième corps ou boîtier (3) comprenant un arrangement de liaisons fluidiques multiples (4, 4', 4", 4"') entre, d'une part, ledit premier corps ou boîtier (2) pourvu d'au moins deux ouvertures mutuellement distinctes (5, 5', 5", 5"') et, d'autre part, au moins un second corps ou boîtier (3) comportant également des ouvertures mutuellement distinctes (6, 6', 6", 6"'), chaque liaison établissant un raccordement fluidique étanche entre une ouverture du premier corps ou boîtier (2) et une ouverture du second corps ou boîtier (3), ou d'un des deuxièmes corps ou boîtiers.

Conformément à l'invention, chacune des liaisons fluidiques (4, 4', 4", 4"') est de nature rigide mais articulée, chaque ouverture (5, 5', 5", 5"') concernée du premier corps ou boîtier (2) est pourvue d'une tubulure femelle rigide (7, 7', 7", 7'") correspondante, droite, courbe ou coudée, et chaque ouverture (6, 6', 6", 6"') concernée du second corps ou boîtier (3), ou des deuxièmes corps ou boîtiers, est munie d'un embout mâle rigide (8, 8', 8", 8"') correspondant, et des conduits rigides ou diabolos (9, 9', 9", 9"') de forme adaptée sont emboîtés, d'une part, dans des tubulures femelles (7, 7', 7", 7'") respectives du premier corps ou boîtier (2) et, d'autre part, sur des embouts mâles (8, 8', 8", 8"') respectifs du second ou des deuxièmes corps ou boîtier (s) (3).

Grâce à ces dispositions, chaque ensemble emboîté [tubulure(7, 7', 7", 7"')/conduit(9, 9', 9", 9"')/embout(8, 8', 8", 8"')], formé d'éléments tubulaires mutuellement emboîtés en matériau plastique rigide, constituant une liaison fluidique étanche (4, 4', 4", 4"') pourvue d'une faculté limitée au moins de déplacement relatif du type rotatif/translatif/angulaire, au moins au niveau de l'emboîtement [tubulure/conduit] concerné, et éventuellement également au niveau de l'emboîtement [conduit/embout] concerné.

Ainsi, chaque liaison fluidique comprend trois segments tubulaires rigides de types différents (tubulures, conduits, embouts), raccordés fluidiquement et mécaniquement en série deux par deux par le biais de liaisons par emboîtement, avec fourniture d'une possibilité d'articulation limitée au niveau de chaque emboîtement de deux segments consécutifs. L'articulation provient d'une faculté de déplacement relatif limité entre deux segments mutuellement emboités, ce déplacement possible pouvant être rotatif et/ou translatif, ou encore comprendre une composante de mouvement modifiant l'orientation entre les segments concernés (rotulage). Pour autoriser ces mouvements relatifs d'articulation, les portions tubulaires mâles et femelles imbriquées au niveau des emboîtements présentent des jeux radiaux suffisants, des moyens d'étanchéités adaptés étant interposés entre ces portions et réalisant le cas échéant le guidage du déplacement relatif. Les différentes liaisons par emboîtements sont configurées pour autoriser chacune une gestion de tolérance axiale d'environ +/- 3mm et un rotulage d'amplitude adaptée pour établir les portions de lignes de circulation (liaisons fluidiques (4, 4', 4", 4'"), avec préservation d'une étanchéité sous des pressions de fluide de 2 à 3 bars.

Du fait de la segmentation des liaisons fluidiques des formes complexes peuvent être obtenues avec un nombre limité d'éléments tubulaires différents et de formes simples : droits, coudés, cintrés. En outre, la rigidité desdits éléments, notamment des conduits (9, 9', 9", 9'"), permet de s'affranchir d'une quelconque fixation intermédiaire et d'automatiser l'assemblage du système (1) du fait de la possibilité d'une préhension sûre, d'un positionnement précis et de transmission d'efforts lors des emboîtements.

Les avantages de l'invention sont particulièrement bénéfiques lorsque l'arrangement de liaisons fluidiques multiples comprend au moins trois, préférentiellement au moins quatre, liaisons fluidiques distinctes (4, 4', 4", 4'").

Afin de rattraper notamment les dispersions de fabrication et d'assemblage, il est avantageusement prévu que chaque liaison fluidique étanche (4, 4', 4", 4"') présente une faculté limitée d'articulation au moins au niveau de son emboîtement [tubulure (7, 7', 7", 7"')/conduit (9, 9', 9", 9"')] respectif, et éventuellement également au niveau de son emboîtement [conduit (9, 9', 9", 9"')/embout (8, 8', 8", 8'")] respectif.

En vue de faciliter l'assemblage du système (1) et en particulier de permettre de réaliser simultanément tous les emboîtements des conduits sur les embouts, les embouts mâles rigides (8, 8', 8", 8"') du second ou des deuxièmes corps ou boîtier (s) (3) présentent tous une constitution droite ou rectiligne, et une même orientation, leurs axes centraux (AC) étant parallèles entre eux.

Chaque couple [tubulure/conduit] est alors configuré, par le choix de segments tubulaires (7, 7', 7", 7'") et (9, 9', 9", 9"') de formes et de dimensions appropriées et par des choix d'orientations adéquates, de telle manière que les extrémités femelles (13) des conduits soient toutes positionnées en regard des embouts pour autoriser un assemblage synchrone par emboîtements multiples conduits-tubulures, lors d'un même mouvement translatif desdits conduits.

Comme le montrent les 1 à 3, la ou les faces du premier corps (2) comportant les ouvertures (5, 5', 5", 5"'), d'une part, et la ou les faces du second ou des deuxièmes corps (3) comportant les ouvertures (6, 6', 6", 6‴) sont par exemple orientées perpendiculairement entre elles. Avantageusement, les faces concernées du premier corps (2) sont des faces latérales de ce dernier, situées sur plusieurs cotés et orientées, en relation avec les dispositions des ouvertures à relier du second ou des deuxièmes corps (3), de telle manière que les liaisons fluidiques présentent des formes simples, avec uniquement un cintrage/coude (cf. 4 et 4"' : conduits 9 et 9'" cintrés) ou au plus deux cintrages/coudes dans deux plans différents (cf. 4' et 4" : tubulures 7' et 7" coudées et conduits 9' et 9" cintrés).

Selon une autre caractéristique de l'invention, les tubulures femelles rigides (7, 7', 7", 7'") consistent en des connecteurs tubulaires (par exemple droits ou coudés) rapportés au niveau des ouvertures (5, 5', 5", 5"') respectivement concernées du premier corps ou boîtier (2), en étant solidarisés rigidement (avec ledit corps ou boîtier), par exemple par soudure.

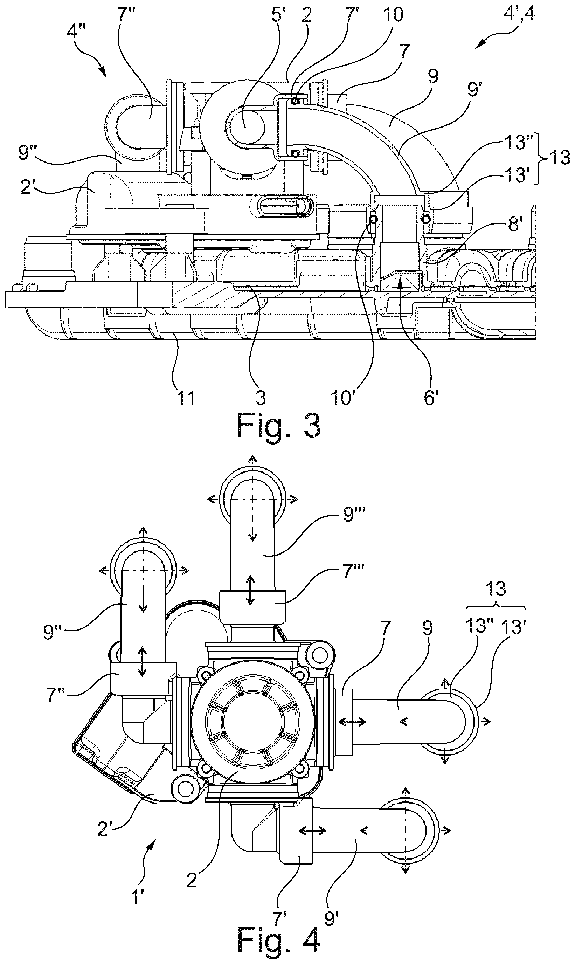

En accord avec une autre caractéristique de l'invention, ressortant des figures 3 et 4, il est avantageusement prévu qu'au moins un, et préférentiellement chaque, emboîtement [tubulure (7, 7', 7", 7"')/conduit (9, 9', 9", 9"')] est configuré pour autoriser un rotulage limité, avec préservation de l'étanchéité au niveau de l'emboîtement concerné.

Alternativement ou additionnellement à la disposition précédente, il peut être prévu qu'au moins un, et préférentiellement chaque, emboîtement [tubulure (7, 7', 7", 7"')/conduit (9, 9', 9", 9"')] soit configuré pour aussi autoriser un déplacement axial relatif limité (entre tubulure et conduit emboités), avec préservation de l'étanchéité au niveau de l'emboîtement concerné.

Les deux dispositions précédentes permettent, chacune à sa manière, de s'accommoder aisément des dispersions géométriques et dimensionnelles lors des assemblages multiples entre conduits et embouts correspondants.

En outre, afin de disposer d'une faculté d'ajustement/de compensation dans la direction d'emboîtement, il peut aussi être envisagé qu'au moins un, et préférentiellement chaque, emboîtement [conduit (9, 9', 9", 9"')/embout (8, 8', 8", 8"')] autorise au moins un déplacement axial limité, avec préservation de l'étanchéité au niveau de l'emboîtement concerné.

Préférentiellement, un joint de compression (10, 10'), par exemple torique ou à lèvre(s) en matériau élastomère, est présent au niveau de chaque emboîtement [tubulure (7, 7', 7", 7"')/conduit (9, 9', 9", 9'")], et préférentiellement également au niveau de chaque emboîtement [conduit (9, 9', 9", 9"')/embout (8, 8', 8", 8"')], de manière à obtenir une étanchéité axiale et/ou radiale en fonction de l'emboîtement concerné. Un joint torique 10 pourra avantageusement favoriser ou guider le rotulage limité entre tubulure et conduit mutuellement emboités.

Selon une première variante de réalisation de l'invention, chaque emboîtement [conduit (9, 9', 9", 9"')/embout (8, 8', 8", 8"')], et avantageusement également chaque emboîtement [tubulure (7, 7', 7", 7"')/conduit (9, 9', 9", 9'")], comprend un moyen (12) de verrouillage libérable. Ce dernier peut par exemple consister en une clavette, une agrafe, un circlips, une vis ou un élément de fixation et de verrouillage analogue.

Conformément à une autre variante de réalisation de l'invention, chaque emboîtement [conduit (9, 9', 9", 9"')/embout (8, 8', 8", 8"')] peut aussi être verrouillé par soudure, en particulier soudure par friction ou par vibration, l'étanchéité au niveau de cet emboîtement étant obtenu soit directement par ladite liaison par soudure, soit par interposition d'un joint de compression (10').

En accord avec une caractéristique constructive très avantageuse de l'invention, illustré sur les figures 3, 5 et 6 et favorable au montage en termes de manipulation, positionnement et assemblage, l'extrémité femelle (13) de chaque conduit (9, 9', 9", 9"') assemblée par emboîtement avec un embout mâle (8, 8', 8", 8‴) comprend au moins une zone de préhension (13'), par exemple sous la forme d'une portion de jupe cylindrique, et au moins une zone d'appui (13"), par exemple sous la forme d'au moins un épaulement.

En prévoyant un double épaulement au niveau des extrémités (13) des conduits comme illustré sur les figures précitées, il est possible de différencier spatialement les fonctions de préhension et d'appui, ou alors de disposer d'une double zone d'appui.

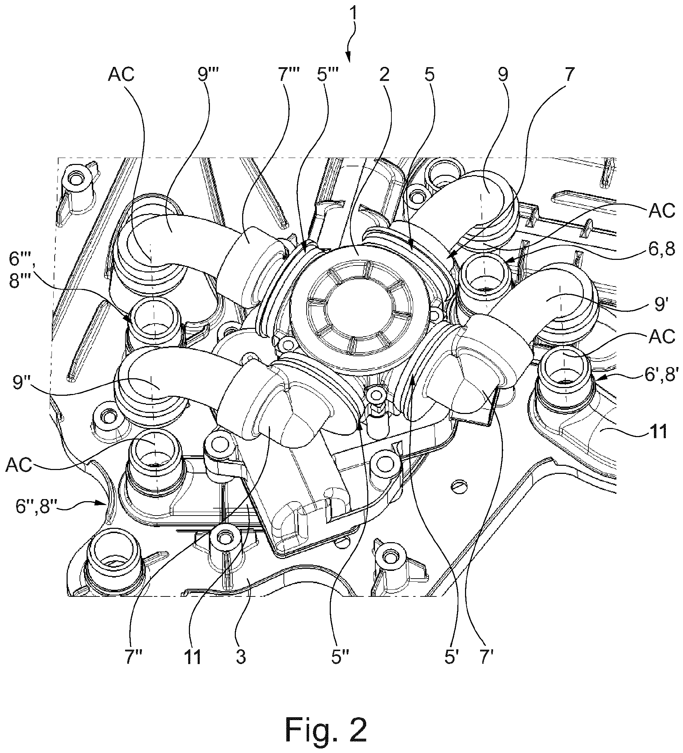

En vue de faciliter la manipulation et l'assemblage des différents éléments constitutifs du système (1), et aussi de rendre plus aisée l'automatisation de ces opérations, il est préférentiellement prévu, comme le montrent les figures 2 et 4 à 6, que le premier corps ou boîtier (2) constitue, avec les différents couples d'éléments tubulaires mutuellement emboîtés [tubulures/conduits] qui lui sont associés, une unité préassemblée (1'), du type module structurel et fonctionnel pré-monté. L'obtention du système (1) ne nécessite alors plus que l'assemblage de ce module (1') avec le second ou les deuxièmes corps (3) par emboîtement des extrémités femelles (13) des conduits sur les embouts.

Conformément à l'invention, en relation avec un système de circulation (1) utilisé pour du fluide liquide et installé sous capot, le premier corps (2) consiste en un corps de vanne de distribution à au moins deux voies, préférentiellement à au moins trois ou quatre voies, et le second corps (3) consiste en une plaque de distribution, préférentiellement du type intégrant des conduits (11) reliés rigidement entre eux, avantageusement situés sensiblement dans un même plan et se terminant chacun à l'une de ses extrémités par un embout (8, 8', 8", 8"') respectif.

Comme le montrent les figures 1, 3 et 7, un actionneur (2') monté dans un boîtier de protection est associé au corps de vanne (2) - renfermant la chambre et l'organe de distribution - et les deux forment ensemble une vanne contrôlant la distribution et la circulation de fluide entre les différentes lignes de liaisons fluidiques étanches (4, 4', 4", 4"'). Cet actionneur (2') est positionné sous le corps de vanne (2), entre ce dernier et le second corps (2) auquel ledit actionneur (2') est avantageusement fixé. On aboutit ainsi à une construction compacte, peu saillante, autorisant un accès facile aux liaisons fluidiques, et avec une solidarisation résistante du module (1') au second corps (3).

L'invention concerne, comme cela ressort des figures 2 et 4 à 6, un module fluidique (1') selon la revendication 1.

Ce module (1') consiste en une unité structurelle et fonctionnelle préassemblée (1') intégrant, d'une part, un premier corps ou boîtier (2) pourvu d'au moins deux ouvertures distinctes (5, 5', 5", 5'") munies chacune d'une tubulure femelle rigide (7, 7', 7", 7'") correspondante, droite, courbe ou coudée, et, d'autre part, des conduits rigides ou diabolos (9, 9', 9", 9"') de formes adaptées et qui sont emboîtés respectivement dans lesdites différentes tubulures femelles (7, 7', 7", 7'"). Ces différents couples d'éléments tubulaires rigides mutuellement emboîtés [tubulures (7, 7', 7", 7"')/conduits (9, 9', 9", 9‴)] sont configurés pour constituer chacun, en coopération par emboîtement avec un embout mâle (8, 8', 8", 8"') respectif d'au moins un deuxième corps ou boîtier (3), une liaison fluidique étanche (4, 4', 4", 4'"), pourvue d'une faculté limitée au moins de déplacement relatif du type rotatif/translatif/angulaire, entre ces premier et deuxième corps ou boîtiers (2 et 3).

Les différentes associations de segments tubulaires emboités [tubulure/conduit] sont conformées et dimensionnées de telle manière que les extrémités femelles (13) des conduits (9, 9', 9", 9'"), destinées à être assemblées par emboîtement avec les embouts mâles (8, 8', 8", 8"'), sont arrangées entre elles et positionnées par rapport au premier corps ou boîtier (2) de manière à reproduire, aux tolérances de fabrication près et avec faculté d'ajustement limité, l'arrangement mutuel des embouts mâles (8, 8', 8", 8"') respectivement correspondants du deuxième corps ou boîtier (3) et leur positionnement par rapport à ce dernier.

Enfin, l'invention concerne également un procédé de réalisation d'un système (1) de circulation de fluide selon la revendication 15.

Préférentiellement, l'assemblage du module pré-monté (1') avec ledit au moins un second corps ou boîtier (3) est réalisé sur un poste robotisé, soit de manière entièrement automatisé par un robot autonome, soit de manière semi-automatique par un robot collaboratif ou d'assistance.

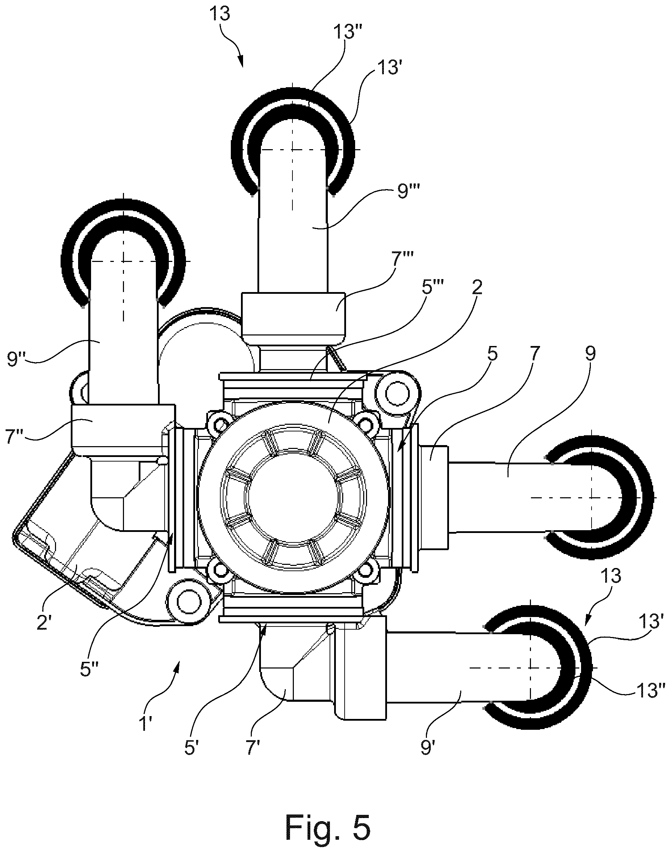

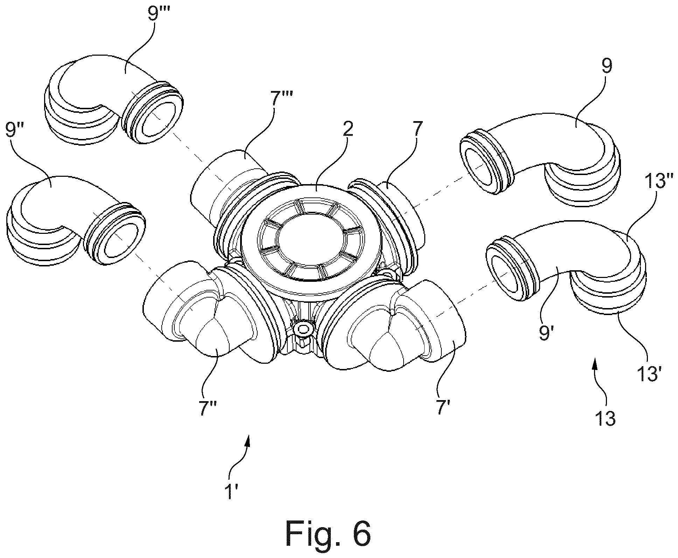

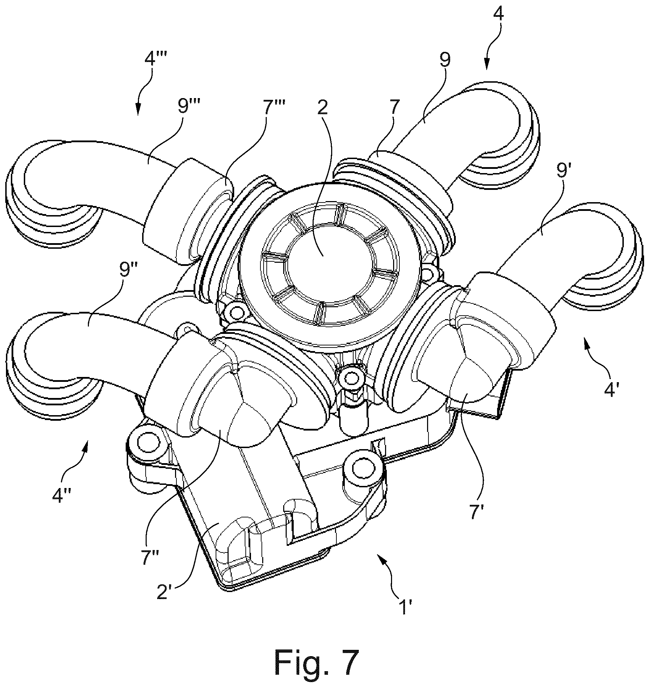

Dans le cadre d'une mise en oeuvre particulièrement avantageuse, le procédé de réalisation d'un système (1) tel qu'évoqué ci-dessus vise un procédé comprenant une première phase d'assemblage d'un module (1') intégrant au moins une partie d'une vanne de distribution multivoies (2) et une seconde phase de montage de ce module préassemblé (1') sur une plaque de distribution (3), ce par simple emboîtement des conduits du module sur les embouts de la plaque, le cas échéant à l'aide d'un outil adapté, et éventuellement de manière au moins partiellement automatisée. Le module (1') peut préférentiellement comprendre la totalité de la vanne, c'est-à-dire le corps de vanne (2) et l'actionneur (2'), comme le montrent les figures 5, 5 et 7, ou alors, comme le montre la figure 6, seulement le corps de vanne. Dans ce dernier cas, l'actionneur (2') peut être pré-monté sur le second corps (3) et l'assemblage du corps de vanne avec l'actionneur (pour former la vanne fonctionnelle) se fait lors du montage du module (1') sur le second corps (3).

Le système (1) de circulation de fluide décrit ci-dessus remplit principalement et simultanément les fonctions suivantes :
- relier les différents boitiers fonctionnels entre eux avec la possibilité de rattraper les tolérances de fabrication et de montage/assemblage,
- avoir une certaine flexibilité pour absorber des petites déformations fonctionnelles (dilatation, variations de pressions...)
- tout en assurant une étanchéité du système de circulation (fluide interne vis-à-vis de l'extérieur).

Le rattrapage des tolérances et la flexibilité pour absorber les petites déformations fonctionnelles sont permises par des jeux fonctionnels au niveau des deux emboitements articulés de chacun des conduits, lesquels vont permettre au conduit considéré de coulisser et/ou de rotuler au niveau de ces interfaces de raccordement par emboîtement.

Dans le cadre des exigences ergonomiques croissantes (effort de montage, simplification d'assemblage), l'automatisation de l'assemblage des modules (1') ou du montage des modules (1') sur les plaques (3) est un avantage certain. Le concept de segments tubulaires rigides de l'invention rend cette automatisation possible puisqu'un effort appliqué sur un tel segment, va, par la rigidité même de ce segment, se convertir en effort d'assemblage/d'insertion/d'emboîtement de ce même segment (cela est plus particulièrement valable pour les conduits).

En cas de besoin, chaque emboîtement articulé peut être verrouillé par un moyen de retenue (voir les exemples mentionnés ci-dessus) qui va permettre par exemple d'empêcher le déboitement sous pression, ou le démontage du module (1') ou du système (1) lors du transport ou de la manipulation.

Concernant les matériaux constitutifs des différentes composantes du système (1), il s'agit de matériaux thermoplastiques. Ainsi, à titre d'exemple, le corps du boîtier (2), les tubulures, les embouts et les diabolos peuvent être réalisés en PP-GF10, le corps du boîtier ou plaque (3) en PA66-GF30 et les joints (10 et 10') en caoutchouc EPDM.

Bien entendu, l'invention n'est pas limitée au mode de réalisation décrit et représenté aux dessins annexés. Des modifications restent possibles, notamment du point de vue de la constitution des divers éléments, sans sortir pour autant du domaine de protection de l'invention tel que défini dans les revendications.

## Revendications

1. Module fluidique (1') destiné à faire partie d'un système (1) de circulation de fluide entre au moins un premier corps ou boîtier (2) et au moins un deuxième corps ou boîtier (3), ce système (1) comprenant un arrangement de liaisons fluidiques multiples (4, 4', 4", 4"') entre, d'une part, ledit premier corps ou boîtier (2) pourvu d'au moins deux ouvertures mutuellement distinctes (5, 5', 5", 5‴) et, d'autre part, au moins un second corps ou boîtier (3) comportant également des ouvertures mutuellement distinctes (6, 6', 6", 6"'), chaque liaison établissant un raccordement fluidique étanche entre une ouverture du premier corps ou boîtier (2) et une ouverture du second corps ou boîtier (3), ou d'un des deuxièmes corps ou boîtiers, et chacune des liaisons fluidiques (4, 4', 4", 4"') étant de nature rigide mais articulée,
le module fluidique consistant en une unité structurelle et fonctionnelle préassemblée (1') qui intègre, d'une part, ledit premier corps ou boîtier (2) dont les ouvertures distinctes (5, 5', 5", 5'") sont munies chacune d'une tubulure femelle rigide (7, 7', 7", 7'") correspondante, droite, courbe ou coudée, et, d'autre part, des conduits rigides (9, 9', 9", 9"') de formes adaptées et qui sont emboîtés respectivement dans lesdites différentes tubulures femelles (7, 7', 7", 7'"),
ces différents couples d'éléments tubulaires rigides mutuellement emboîtés tubulures (7, 7', 7", 7"')-conduits (9, 9', 9", 9'") étant configurés pour constituer, en coopération respective par emboîtement avec des embouts mâles rigides (8, 8', 8", 8"') équipant les ouvertures (6, 6', 6", 6"') dudit au moins un deuxième corps ou boîtier (3), une liaison fluidique étanche (4, 4', 4", 4'"), pourvue d'une faculté limitée au moins de déplacement relatif du type rotatif et angulaire, et éventuellement aussi translatif, entre ces premier et deuxième corps ou boîtiers (2 et 3),
chaque ensemble emboîté tubulure-conduit-embout, formé d'éléments tubulaires mutuellement emboîtés en matériau plastique rigide, constituant une liaison fluidique étanche (4, 4', 4", 4"') pourvue d'une faculté limitée au moins de déplacement relatif du type rotatif et angulaire, et éventuellement aussi translatif, au moins au niveau de l'emboîtement tubulure-conduit concerné, et éventuellement également au niveau de l'emboîtement conduit-embout concerné,
le module fluidique étant **caractérisé en ce que** le premier corps (2) consiste en un corps de vanne de distribution à au moins deux voies, préférentiellement à au moins trois ou quatre voies, et **en ce que** le second corps (3) consiste en une plaque de distribution, préférentiellement du type intégrant des conduits (11) reliés rigidement entre eux, avantageusement situés sensiblement dans un même plan et se terminant chacun à l'une de ses extrémités par un embout (8, 8', 8", 8"') respectif.

2. Module fluidique selon la revendication 1, **caractérisé en ce que** l'arrangement de liaisons fluidiques multiples comprend au moins trois, préférentiellement au moins quatre, liaisons fluidiques distinctes (4, 4', 4", 4‴).

3. Module fluidique selon la revendication 1 ou 2, **caractérisé en ce que** chaque liaison fluidique étanche (4, 4', 4", 4'") présente une faculté limitée d'articulation au moins au niveau de son emboîtement tubulure (7, 7', 7", 7"')-conduit (9, 9', 9", 9"') respectif, et éventuellement également au niveau de son emboîtement conduit (9, 9', 9", 9"')-embout (8, 8', 8", 8'") respectif.

4. Module fluidique selon l'une quelconque des revendications 1 à 3, **caractérisé en ce que** les embouts mâles rigides (8, 8', 8", 8"') du second ou des deuxièmes corps ou boîtier (s) (3) présentent tous une constitution droite ou rectiligne, et une même orientation, leurs axes centraux étant parallèles entre eux.

5. Module fluidique selon l'une quelconque des revendications 1 à 4, **caractérisé en ce que** les tubulures femelles rigides (7, 7', 7", 7'") consistent en des connecteurs tubulaires rapportés au niveau des ouvertures (5, 5', 5", 5"') respectivement concernées du premier corps ou boîtier (2), en étant solidarisés rigidement par exemple par soudure.

6. Module fluidique selon l'une quelconque des revendications 1 à 5, **caractérisé en ce que** qu'au moins un, et préférentiellement chaque emboîtement tubulure (7, 7', 7", 7"')-conduit (9, 9', 9", 9"') est configuré pour autoriser un rotulage limité, avec préservation de l'étanchéité au niveau de l'emboîtement concerné.

7. Module fluidique selon la revendication 6, **caractérisé en ce que** qu'au moins un, et préférentiellement chaque emboîtement tubulure (7, 7', 7", 7"')-conduit (9, 9', 9", 9"') est configuré pour aussi autoriser un déplacement axial relatif limité, avec préservation de l'étanchéité au niveau de l'emboîtement concerné.

8. Module fluidique selon l'une quelconque des revendications 1 à 7, **caractérisé en ce qu'**au moins un, et préférentiellement chaque emboîtement conduit (9, 9', 9", 9"')-embout (8, 8', 8", 8"') autorise au moins un déplacement axial limité, avec préservation de l'étanchéité au niveau de l'emboîtement concerné.

9. Module fluidique selon l'une quelconque des revendications 1 à 8, **caractérisé en ce qu'**un joint de compression (10, 10'), par exemple torique ou à lèvre(s) en matériau élastomère, est présent au niveau de chaque emboîtement tubulure (7, 7', 7", 7"')-conduit (9, 9', 9", 9"'), et préférentiellement également au niveau de chaque emboîtement conduit (9, 9', 9", 9"')-embout (8, 8', 8", 8"'), de manière à obtenir une étanchéité axiale et/ou radiale en fonction de l'emboîtement concerné.

10. Module fluidique selon l'une quelconque des revendications 1 à 7, **caractérisé en ce que** chaque emboîtement conduit (9, 9', 9", 9"')-embout (8, 8', 8", 8"') est verrouillé par soudure, en particulier soudure par friction ou par vibration, l'étanchéité au niveau de cet emboîtement étant obtenu soit directement par ladite liaison par soudure, soit par interposition d'un joint de compression (10').

11. Module fluidique selon l'une quelconque des revendications 1 à 7, **caractérisé en ce que** chaque emboîtement conduit (9, 9', 9", 9"')-embout (8, 8', 8", 8‴), et avantageusement chaque emboîtement tubulure (7, 7', 7", 7"')-conduit (9, 9', 9", 9'"), comprend un moyen (12) de verrouillage libérable.

12. Module fluidique selon l'une quelconque des revendications 1 à 11, **caractérisé en ce que** l'extrémité femelle (13) de chaque conduit (9, 9', 9", 9"') assemblée par emboîtement avec un embout mâle (8, 8', 8", 8"') comprend au moins une zone de préhension (13'), par exemple sous la forme d'une portion de jupe cylindrique, et au moins une zone d'appui (13"), par exemple sous la forme d'au moins un épaulement.

13. Module fluidique selon l'une quelconque des revendications 1 à 12, **caractérisé en ce que** le premier corps ou boîtier (2) constitue, avec les différents couples d'éléments tubulaires mutuellement emboîtés tubulures-conduits qui lui sont associés, une unité préassemblée (1'), du type module structurel et fonctionnel pré-monté.

14. Module fluidique selon l'une quelconque des revendications 1 à 13, **caractérisé en ce que** les extrémités femelles (13) des conduits (9, 9', 9", 9'"), destinées à être assemblées par emboîtement avec les embouts mâles (8, 8', 8", 8"'), sont arrangées entre elles et positionnées par rapport au premier corps ou boîtier (2) de manière à reproduire, aux tolérances de fabrication près et avec faculté d'ajustement limité, l'arrangement mutuel des embouts mâles (8, 8', 8", 8"') respectivement correspondants du deuxième corps ou boîtier (3) et leur positionnement par rapport à ce dernier.

15. Procédé de réalisation d'un système (1) de circulation de fluide entre au moins un premier corps ou boîtier (2) et au moins un deuxième corps ou boîtier (3) , ce système (1) comprenant un arrangement de liaisons fluidiques multiples (4, 4', 4", 4"') entre, d'une part, ledit premier corps ou boîtier (2) pourvu d'au moins deux ouvertures distinctes (5, 5', 5", 5"') et, d'autre part, au moins un second corps ou boîtier (6) comportant des ouvertures distinctes (6, 6', 6", 6"'), chaque liaison établissant un raccordement fluidique étanche entre une ouverture du premier corps ou boîtier (2) et une ouverture du second corps ou boîtier (3), ou d'un des deuxièmes corps ou boîtiers,
ce procédé consistant
à fournir un premier corps ou boîtier (2) dont chaque ouverture (5, 5', 5", 5'") est pourvue d'une tubulure femelle rigide (7, 7', 7", 7'") correspondante, droite, courbe ou coudée, au moins un second corps ou boîtier (3) dont chaque ouverture (6, 6', 6", 6'") est munie d'un embout mâle rigide (8, 8', 8", 8"') correspondant, et des conduits rigides (9, 9', 9", 9"') de forme adaptée, configurés pour être emboîtés, d'une part, dans des tubulures femelles (7, 7', 7", 7'") respectives du premier corps ou boîtier (2) et, d'autre part, sur des embouts mâles (8, 8', 8", 8"') respectifs du second ou des deuxièmes corps ou boîtier (s) (3), et
à réaliser des ensembles emboîtés tubulure-conduit-embout, formé d'éléments tubulaires mutuellement emboîtés en matériau plastique rigide, constituant chacun une liaison fluidique étanche (4, 4', 4", 4"') et pourvu chacun d'une faculté limitée au moins de déplacement relatif du type rotatif et angulaire, et éventuellement aussi translatif, au moins au niveau de l'emboîtement tubulure-conduit concerné, et éventuellement également au niveau de l'emboîtement conduit-embout concerné, de manière à obtenir des liaisons fluidiques (4, 4', 4", 4‴) de nature rigide mais articulée,
procédé **caractérisé en ce qu'**il consiste, dans une phase opératoire séparée et préliminaire, à produire un module structurel et fonctionnel pré-monté (1') selon l'une quelconque des revendications 1 à 14, soit par assemblage du premier corps ou boîtier (2) avec les différents couples d'éléments tubulaires mutuellement pré-emboîtés tubulures-conduits qui lui sont associés, soit par assemblage des tubulures femelles (7, 7', 7", 7'") avec ledit premier corps ou boîtier (2), puis assemblage par emboîtement des conduits rigides ou diabolos (9, 9', 9", 9"') avec les tubulures (7, 7', 7", 7'") respectivement correspondantes, et à assembler ensuite ce module (1') mécaniquement et fluidiquement, par montage selon une direction parallèle aux axes centraux des embouts mâles rectilignes rigides (8, 8', 8", 8"') et emboîtements multiples des conduits rigides ou diabolos (9, 9', 9", 9"') sur ces embouts (8, 8', 8", 8"'), avec ledit au moins un second corps ou boîtier (3) pour former le système (1) de circulation de fluide.

16. Procédé selon la revendication 15, **caractérisé en ce que** l'assemblage du module pré-monté (1') avec ledit au moins un second corps ou boîtier (3) est réalisé sur un poste robotisé, soit de manière entièrement automatisée par un robot autonome, soit de manière semi-automatique par un robot collaboratif ou d'assistance.

## Patentansprüche

1. Fluidmodul (1'), das dazu bestimmt ist, Teil eines Fluidzirkulationssystems (1) zwischen mindestens einem ersten Körper oder Gehäuse (2) und mindestens einem zweiten Körper oder Gehäuse (3) zu sein, wobei dieses System (1) eine Anordnung aus mehreren Fluidverbindungen (4, 4', 4", 4'") umfasst zwischen einerseits dem ersten Körper oder Gehäuse (2), der bzw. das mit mindestens zwei voneinander verschiedenen Öffnungen (5, 5', 5", 5'") versehen ist, und andererseits mindestens einem zweiten Körper oder Gehäuse (3), der bzw. das ebenfalls voneinander verschiedene Öffnungen (6, 6', 6", 6'") aufweist, wobei jede Verbindung einen dichten Fluidanschluss zwischen einer Öffnung des ersten Körpers oder Gehäuses (2) und einer Öffnung des zweiten Körpers oder Gehäuses (3) oder eines der zweiten Körper oder Gehäuse herstellt und wobei jede der Fluidverbindungen (4, 4', 4", 4'") starr ist, aber schwenkbar ist,
wobei das Fluidmodul aus einer vormontierten strukturellen und funktionellen Einheit (1') besteht, die einerseits den ersten Körper oder das erste Gehäuse (2), dessen verschiedene Öffnungen (5, 5', 5", 5'") jeweils mit einem entsprechenden geraden, gebogenen oder abgewinkelten starren Muffenstutzen (7, 7', 7", 7'") versehen sind, und andererseits starre Rohre (9, 9', 9", 9‴) mit geeigneten Formen, die jeweils in die verschiedenen Muffenstutzen (7, 7', 7", 7'") gesteckt sind, beinhaltet,
wobei diese verschiedenen Paare aus ineinandergesteckten starren röhrenförmigen Elementen Stutzen (7, 7', 7", 7'")/Rohr (9, 9', 9", 9'") dazu ausgestaltet sind, unter jeweiligem Zusammenwirken durch Zusammenstecken mit starren Nippeln (8, 8', 8", 8'"), mit denen die Öffnungen (6, 6', 6", 6'") des mindestens einen zweiten Körpers oder Gehäuses (3) ausgestattet sind, eine dichte Fluidverbindung (4, 4', 4", 4'") zu bilden, die mit einer begrenzten Möglichkeit mindestens zur relativen Verlagerung vom rotatorischen und winkligen und eventuell auch translatorischen Typ zwischen diesen ersten und zweiten Körpern oder Gehäusen (2 und 3) versehen ist,
wobei jede gesteckte Einheit Stutzen/Rohr/Nippel, die aus ineinandergesteckten röhrenförmigen Elementen aus starrem Kunststoff gebildet wird, eine dichte Fluidverbindung (4, 4', 4", 4"') bildet, die mit einer begrenzten Möglichkeit mindestens zur relativen Verlagerung vom rotatorischen und winkligen und eventuell auch translatorischen Typ versehen ist, mindestens an der betreffenden Steckverbindung Stutzen/Rohr und eventuell auch an der betreffenden Steckverbindung Rohr/Nippel,
wobei das Fluidmodul **dadurch gekennzeichnet ist, dass** der erste Körper (2) aus einem Verteilerventilkörper mit mindestens zwei Wegen, bevorzugt mit mindestens drei oder vier Wegen, besteht und dass der zweite Körper (3) aus einer Verteilerplatte besteht, bevorzugt von dem Typ, der Kanäle (11) beinhaltet, die starr untereinander verbunden sind, vorteilhafterweise im Wesentlichen in einer selben Ebene gelegen sind und jeweils an einem ihrer Enden mit einem jeweiligen Nippel (8, 8', 8", 8'") abgeschlossen werden.

2. Fluidmodul nach Anspruch 1, **dadurch gekennzeichnet, dass** die Anordnung aus mehreren Fluidverbindungen mindestens drei, bevorzugt mindestens vier verschiedene Fluidverbindungen (4, 4', 4", 4'") umfasst.

3. Fluidmodul nach Anspruch 1 oder 2, **dadurch gekennzeichnet, dass** jede dichte Fluidverbindung (4, 4', 4", 4'") eine begrenzte Schwenkmöglichkeit mindestens an ihrer jeweiligen Steckverbindung Stutzen (7, 7', 7", 7'")/Rohr (9, 9', 9", 9'") und eventuell auch an ihrer jeweiligen Steckverbindung Rohr (9, 9', 9", 9'")/Nippel (8, 8', 8", 8‴) aufweist.

4. Fluidmodul nach einem der Ansprüche 1 bis 3, **dadurch gekennzeichnet, dass** die starren Nippel (8, 8', 8", 8'") des zweiten oder der zweiten Körper(s) oder Gehäuse(s) (3) alle einen geraden oder geradlinigen Aufbau und eine gleiche Ausrichtung aufweisen, wobei ihre Mittelachsen zueinander parallel sind.

5. Fluidmodul nach einem der Ansprüche 1 bis 4, **dadurch gekennzeichnet, dass** die starren Muffenstutzen (7, 7', 7", 7'") aus röhrenförmigen Verbindern bestehen, die an jeweils betroffene Öffnungen (5, 5', 5", 5'") des ersten Körpers oder Gehäuses (2) angesetzt sind, wobei sie zum Beispiel durch Schweißen starr befestigt sind.

6. Fluidmodul nach einem der Ansprüche 1 bis 5, **dadurch gekennzeichnet, dass** mindestens eine und bevorzugte jede Steckverbindung Stutzen (7, 7', 7", 7'")/Rohr (9, 9', 9", 9'") dazu ausgestaltet ist, eine begrenzte Drehung unter Wahrung der Dichtigkeit an der betreffenden Steckverbindung zuzulassen.

7. Fluidmodul nach Anspruch 6, **dadurch gekennzeichnet, dass** mindestens eine und bevorzugte jede Steckverbindung Stutzen (7, 7', 7", 7"')/Rohr (9, 9', 9", 9'") auch dazu ausgestaltet ist, eine begrenzte relative axiale Verlagerung unter Wahrung der Dichtigkeit an der betreffenden Steckverbindung zuzulassen.

8. Fluidmodul nach einem der Ansprüche 1 bis 7, **dadurch gekennzeichnet, dass** mindestens eine und bevorzugte jede Steckverbindung Rohr (9, 9', 9", 9'")/Nippel (8, 8', 8", 8'") mindestens eine begrenzte axiale Verlagerung unter Wahrung der Dichtigkeit an der betreffenden Steckverbindung zulässt.

9. Fluidmodul nach einem der Ansprüche 1 bis 8, **dadurch gekennzeichnet, dass** eine Kompressionsdichtung (10, 10'), zum Beispiel ein O-Ring oder eine Lippendichtung aus Elastomermaterial, an jeder Steckverbindung Stutzen (7, 7', 7", 7‴)/Rohr (9, 9', 9", 9‴) und bevorzugt auch an jeder Steckverbindung Rohr (9, 9', 9", 9‴)/Nippel (8, 8', 8", 8‴) vorhanden ist, so dass in Abhängigkeit von der betroffenen Steckverbindung eine axiale und/oder radiale Dichtigkeit erhalten wird.

10. Fluidmodul nach einem der Ansprüche 1 bis 7, **dadurch gekennzeichnet, dass** jede Steckverbindung Rohr (9, 9', 9", 9'")/Nippel (8, 8', 8", 8'") durch Schweißen, insbesondere durch Reibungs- oder Vibrationsschweißen, gesichert ist, wobei die Dichtigkeit an dieser Steckverbindung entweder direkt durch die Schweißverbindung oder durch Dazwischensetzen einer Kompressionsdichtung (10') erhalten wird.

11. Fluidmodul nach einem der Ansprüche 1 bis 7, **dadurch gekennzeichnet, dass** jede Steckverbindung Rohr (9, 9', 9", 9'")/Nippel (8, 8', 8", 8'") und vorteilhafterweise jede Steckverbindung Stutzen (7, 7', 7", 7"')/Rohr (9, 9', 9", 9'") ein freigebbares (12) Sicherungsmittel umfasst.

12. Fluidmodul nach einem der Ansprüche 1 bis 11, **dadurch gekennzeichnet, dass** das Muffenende (13) jedes Rohrs (9, 9', 9", 9'"), das durch Zusammenstecken mit einem Nippel (8, 8', 8", 8‴) montiert wird, mindestens einen Greifbereich (13'), zum Beispiel in Form eine zylindrischen Mantelabschnitts, und mindestens einen Stützbereich (13"), zum Beispiel in Form mindestens einer Schulter, umfasst.

13. Fluidmodul nach einem der Ansprüche 1 bis 12, **dadurch gekennzeichnet, dass** der erste Körper oder das erste Gehäuse (2) mit den ihm zugeordneten verschiedenen Paaren aus ineinandergesteckten röhrenförmigen Stutzen/Rohr-Elementen eine vormontierte Einheit (1') vom Typ eines bereits zusammengebauten strukturellen und funktionellen Moduls bildet.

14. Fluidmodul nach einem der Ansprüche 1 bis 13, **dadurch gekennzeichnet, dass** die Muffenenden (13) der Rohre (9, 9', 9", 9'"), die dazu bestimmt sind, durch Zusammenstecken mit den Nippeln (8, 8', 8", 8'") montiert zu werden, so untereinander angeordnet und in Bezug auf den ersten Körper oder das erste Gehäuse (2) positioniert sind, dass, bis auf die Fertigungstoleranzen und mit begrenzter Anpassungsmöglichkeit, die wechselseitige Anordnung der jeweils entsprechenden Nippel (8, 8', 8", 8'") des zweiten Körpers oder Gehäuses (3) und ihre Positionierung in Bezug auf Letzteren bzw. Letzteres reproduziert wird.

15. Verfahren zur Herstellung eines Fluidzirkulationssystems (1) zwischen mindestens einem ersten Körper oder Gehäuse (2) und mindestens einem zweiten Körper oder Gehäuse (3), wobei dieses System (1) eine Anordnung aus mehreren Fluidverbindungen (4, 4', 4", 4'") zwischen einerseits dem ersten Körper oder Gehäuse (2), der bzw. das mit mindestens zwei verschiedenen Öffnungen (5, 5', 5", 5'") versehen ist, und andererseits mindestens einem zweiten Körper oder Gehäuse (6), der bzw. das verschiedene Öffnungen (6, 6', 6", 6'") aufweist, umfasst, wobei jede Verbindung einen dichten Fluidanschluss zwischen einer Öffnung des ersten Körpers oder Gehäuses (2) und einer Öffnung des zweiten Körpers oder Gehäuses (3) oder eines der zweiten Körper oder Gehäuse herstellt,
wobei dieses Verfahren darin besteht, einen ersten Körper oder ein erstes Gehäuse (2) bereitzustellen, bei dem jede Öffnung (5, 5', 5", 5'") mit einem entsprechenden geraden, gebogenen oder abgewinkelten starren Muffenstutzen (7, 7', 7", 7'") versehen ist, mindestens einen zweiten Körper oder ein zweites Gehäuse (3), bei dem jede Öffnung (6, 6', 6", 6'") mit einem entsprechenden starren Nippel (8, 8', 8", 8'") versehen ist, und starre Rohre (9, 9', 9", 9'") von geeigneter Form, die dazu ausgestaltet sind, zum einen in jeweilige Muffenstutzen (7, 7', 7", 7‴) des ersten Körpers oder Gehäuses (2) und zum anderen auf jeweilige Nippel (8, 8', 8", 8‴) des oder der zweiten Körper(s) oder Gehäuse(s) (3) gesteckt zu werden, und zusammengesteckte Einheiten Stutzen/Rohr/Nippel herzustellen, die aus ineinandergesteckten röhrenförmigen Elementen aus starrem Kunststoff gebildet werden, die jeweils eine dichte Fluidverbindung (4, 4', 4", 4'") bilden und jeweils mit einer begrenzten Möglichkeit mindestens zur relativen Verlagerung vom rotatorischen und winkligen und eventuell auch translatorischen Typ versehen sind, mindestens an der betreffenden Steckverbindung Stutzen/Rohr und eventuell auch an der betreffenden Steckverbindung Rohr/Nippel, so dass starre, aber schwenkbare Fluidverbindungen (4, 4', 4", 4'") erhalten werden,
wobei das Verfahren **dadurch gekennzeichnet ist, dass** es darin besteht, in einer separaten und vorbereitenden Arbeitsphase ein bereits zusammengebautes strukturelles und funktionelles Modul (1') nach einem der Ansprüche 1 bis 14 zu produzieren, entweder durch Montieren des ersten Körpers oder Gehäuses (2) mit den ihm zugeordneten verschiedenen Paaren aus bereits ineinandergesteckten röhrenförmigen Elementen Stutzen/Rohre oder durch Montieren der Muffenstutzen (7, 7', 7", 7'") mit dem ersten Körper oder Gehäuse (2), dann Montieren durch Zusammenstecken der starren Rohre oder Diabolos (9, 9', 9", 9'") mit den jeweils entsprechenden Stutzen (7, 7', 7", 7"'), und anschließend dieses Modul (1') mechanisch und fluidisch, durch Zusammenbauen entlang einer parallel zu den Mittelachsen der starren geradlinigen Nippel (8, 8', 8", 8'") verlaufenden Richtung und mehrfaches Stecken der starren Rohre oder Diabolos (9, 9', 9", 9'") auf diese Nippel (8, 8', 8", 8'"), mit dem mindestens einen zweiten Körper oder Gehäuse (3) zu montieren, um das Fluidzirkulationssystem (1) zu bilden.

16. Verfahren nach Anspruch 15, **dadurch gekennzeichnet, dass** das Montieren des bereits zusammengebauten Moduls (1') an dem mindestens einen zweiten Körper oder Gehäuse (3) an einem robotisierten Arbeitsplatz ausgeführt wird, entweder vollautomatisch durch einen autonomen Roboter oder halbautomatisch durch einen kollaborativen oder Assistenzroboter.

## Claims

1. Fluidic module (1') intended to form part of a system (1) for circulating fluid between at least one first body or housing (2) and at least one second body or housing (3), this system (1) comprising an arrangement of multiple fluidic connections (4, 4', 4" , 4‴) between, on the one hand, said first body or housing (2) provided with at least two mutually distinct openings (5, 5', 5", 5‴) and, on the other hand, at least one second body or housing (3) also comprising mutually distinct openings (6, 6', 6", 6‴), each connection establishing a leaktight fluidic connection between an opening of the first body or housing (2) and an opening of the second body or housing (3), or of one of the second bodies or housings, and each of the fluidic connections (4, 4', 4¹¹, 4''') being of a rigid but articulated type,
the fluidic module consisting of a preassembled structural and functional unit (1') which incorporates, on the one hand, said first body or housing (2) of which the distinct openings (5, 5', 5", 5‴) are each provided with a corresponding straight, curved or angled rigid female tube (7, 7', 7", 7‴), and, on the other hand, rigid ducts (9, 9', 9'', 9‴) of suitable shapes which are respectively nested in said various female tubes (7, 7', 7", 7‴),
these various pairs of mutually nested rigid tubular elements [tubes (7, 7', 7'', 7''')/ducts (9, 9', 9'', 9"')] being configured to constitute, in respective cooperation by nesting with rigid male fittings (8, 8', 8'', 8‴) equipping the openings (6, 6', 6", 6‴) of said at least one second body or housing (3), a leaktight fluidic connection (4, 4', 4'', 4‴) provided with a limited capability at least for rotational and angular, and possibly also translational, relative displacement between these first and second bodies or housings (2 and 3), each nested tube/duct/fitting assembly, formed of mutually nested tubular elements made of rigid plastic material, constituting a leaktight fluidic connection (4, 4', 4¹¹, 4''') provided with a limited capability at least for rotational and angular, and possibly also translational, relative displacement at least at the relevant tube/duct nesting, and possibly also at the relevant duct/fitting nesting,
the fluidic module being **characterized in that** the first body (2) consists of a directional-control valve body with at least two ports, preferably with at least three or four ports, and **in that** the second body (3) consists of a directional-control distributor plate, preferably of the type incorporating ducts (11) rigidly connected to one another, advantageously situated largely in the same plane and each being terminated at one of its ends by a respective fitting (8, 8', 8'', 8‴).

2. Fluidic module according to Claim 1, **characterized in that** the arrangement of multiple fluidic connections comprises at least three, preferably at least four, distinct fluidic connections (4, 4', 4'', 4‴) .

3. Fluidic module according to Claim 1 or 2, **characterized in that** each leaktight fluidic connection (4, 4', 4¹¹, 4''') has a limited capability of articulation at least at its respective tube (7, 7', 7", 7‴)/duct (9, 9', 9'', 9‴) nesting, and possibly also at its respective duct (9, 9', 9'', 9"')/fitting (8, 8', 8'', 8‴) nesting.

4. Fluidic module according to any one of Claims 1 to 3, **characterized in that** the rigid male fittings (8, 8', 8'', 8''') of the second body (bodies) or housing(s) (3) all have a straight or rectilinear constitution, and the same orientation, their central axes being parallel to one another.

5. Fluidic module according to any one of Claims 1 to 4, **characterized in that** the rigid female tubes (7, 7', 7'' , 7''') consist of tubular connectors attached to the respectively concerned openings (5, 5', 5", 5‴) of the first body or housing (2) by being rigidly secured by welding, for example.

6. Fluidic module according to any one of Claims 1 to 5, **characterized in that** at least one, and preferably each, tube (7, 7', 7", 7‴)/duct (9, 9', 9'', 9''') nesting is configured to allow limited swivelling, while maintaining the sealing at the relevant nesting.

7. Fluidic module according to Claim 6, **characterized in that** at least one, and preferably each, tube (7, 7', 7'', 7"')/duct (9, 9', 9", 9‴) nesting is configured to also allow limited relative axial displacement, while preserving the sealing at the relevant nesting.

8. Fluidic module according to any one of Claims 1 to 7, **characterized in that** at least one, and preferably each, duct (9, 9', 9'', 9‴)/fitting (8, 8', 8", 8‴) nesting allows at least a limited axial displacement, while preserving the sealing at the relevant nesting.

9. Fluidic module according to any one of Claims 1 to 8, **characterized in that** a compression seal (10, 10'), for example an O-ring or lip seal made of elastomer material, is present at each tube (7, 7', 7'', 7‴)/duct (9, 9', 9'', 9‴) nesting, and preferably also at each duct (9, 9', 9", 9‴) /fitting (8, 8', 8'', 8‴) nesting, so as to obtain axial and/or radial sealing depending on the relevant nesting.

10. Fluidic module according to any one of Claims 1 to 7, **characterized in that** each duct (9, 9', 9", 9‴)/fitting (8, 8', 8'', 8‴) nesting is locked by welding, in particular friction or vibration welding, the sealing at this nesting being obtained either directly by said welded connection or by interposition of a compression seal (10').

11. Fluidic module according to any one of Claims 1 to 7, **characterized in that** each duct (9, 9', 9", 9‴)/fitting (8, 8', 8'', 8‴) nesting, and advantageously each tube (7, 7', 7", 7‴)/duct (9, 9', 9'', 9‴) nesting, comprises a releasable locking means (12).

12. Fluidic module according to any one of Claims 1 to 11, **characterized in that** the female end (13) of each duct (9, 9', 9", 9"') assembled by nesting with a male fitting (8, 8', 8'', 8‴) comprises at least one gripping zone (13'), for example in the form of a cylindrical skirt portion, and at least one bearing zone (13"), for example in the form of at least one shoulder.

13. Fluidic module according to any one of Claims 1 to 12, **characterized in that** the first body or housing (2) constitutes, with the various pairs of mutually nested tubular elements [tubes/ducts] which are associated with it, a preassembled unit (1') of the premounted structural and functional module type.

14. Fluidic module according to any one of Claims 1 to 13, **characterized in that** the female ends (13) of the ducts (9, 9', 9", 9‴), intended to be assembled by nesting with the male fittings (8, 8', 8", 8‴), are arranged between them and positioned with respect to the first body or housing (2) so as to reproduce, to within the manufacturing tolerances and with the capability of limited adjustment, the mutual arrangement of the respectively corresponding male fittings (8, 8', 8'', 8‴) of the second body of housing (3) and their positioning with respect to the latter.

15. Method for producing a system (1) for circulating fluid between at least one first body or housing (2) and at least one second body or housing (3), this system (1) comprising an arrangement of multiple fluidic connections (4, 4', 4", 4‴) between, on the one hand, said first body or housing (2) provided with at least two distinct openings (5, 5', 5", 5‴) and, on the other hand, at least one second body or housing (6) comprising distinct openings (6, 6', 6", 6‴), each connection establishing a leaktight fluidic connection between an opening of the first body or housing (2) and an opening of the second body or housing (3), or of one of the second bodies or housings,
this method consisting
in providing a first body or housing (2) of which each opening (5, 5', 5", 5‴) is provided with a corresponding straight, curved or angled rigid female tube (7, 7', 7", 7‴), at least one second body or housing (3) of which each opening (6, 6', 6'', 6‴) is provided with a corresponding rigid male fitting (8, 8', 8", 8‴), and rigid ducts (9, 9', 9'', 9‴) of suitable shape configured to be nested, on the one hand, in respective female tubes (7, 7', 7", 7‴) of the first body or housing (2) and, on the other hand, on respective male fittings (8, 8', 8'', 8‴) of the second body (bodies) or housing(s) (3), and
in producing nested tube/duct/fitting assemblies, formed of mutually nested tubular elements made of rigid plastic material, each constituting a leaktight fluidic connection (4, 4', 4", 4‴) and each provided with a limited capability at least for rotational and angular, and possibly also translational, relative displacement at least at the relevant tube/duct nesting, and possibly also at the relevant duct/fitting nesting, so as to obtain fluidic connections (4, 4', 4¹¹, 4''') of a rigid but articulated type,
which method is **characterized in that** it consists, in a separate and preliminary operating phase, in producing a premounted structural and functional module (1') according to any one of Claims 1 to 14, either by assembling the first body or housing (2) with the various pairs of mutually prenested tubular elements [tubes/ducts] which are associated with it, or by assembling the female tubes (7, 7', 7'' , 7‴) with said first body or housing (2), then assembling by nesting the rigid ducts or diabolos (9, 9', 9", 9‴) with the respectively corresponding tubes (7, 7', 7" , 7‴), and in then assembling this module (1') mechanically and fluidically, by mounting in a direction parallel to the central axes of the rigid rectilinear male fittings (8, 8', 8'', 8''') and multiple nestings of the rigid ducts or diabolos (9, 9', 9'', 9‴) on these fittings (8, 8', 8'', 8‴), with said at least one second body or housing (3) to form the fluid circulation system (1).

16. Method according to Claim 15, **characterized in that** the assembly of the premounted module (1') with said at least one second body or housing (3) is carried out at a robotic station, either in a fully automated manner by an autonomous robot or in a semi-automatic manner by a collaborative or assistance robot.
